# EUROPÄISCHE PATENTANMELDUNG

(11) **EP 0 976 973 A2**
(43) Veröffentlichungstag der Anmeldung: **02.02.2000**
(21) Anmeldenummer: 99112677.2
(22) Anmeldetag: 02.07.1999
(51) Int. Cl.: F21V 14/00

(54) **Scheinwerfer für Fahrzeuge**

(30) Priorität: 31.07.1998 DE 19834566
(71) Anmelder: Bayerische Motoren Werke Aktiengesellschaft, 80788 München (DE)
(72) Erfinder: Hahn, Wolfgang, 85247 Schwabhausen (DE); Huhn, Wolfgang, 85247 Schwabhausen (DE)

(57) **Zusammenfassung**

Bei einem Scheinwerfer für Fahrzeuge, der innerhalb seines Ausleuchtbereichs ein Vorfeld beleuchtet, das bis in eine Entfernung von ca. 30 m vor dem Fahrzeug reicht, ist die Beleuchtungs-Intensität des Vorfelds bei einer Beschaffenheit der Fahrbahnoberfläche, bei der die Gefahr einer Reflexion des Scheinwerferlichts zur Gegenfahrbahnr hin besteht, gegenüber dem Betriebsfall einer weitgehend reflexionsfreien Fahrbahn deutlich verringert.

## Beschreibung

Die Erfindung bezieht sich auf einen Scheinwerfer für Fahrzeuge, der innerhalb seines Ausleuchtbereichs ein Vorfeld beleuchtet, das bis in eine Entfernung von ca. 30 m vor dem Fahrzeug reicht. Es kann sich dabei um einen Abblendlicht- oder auch um einen Nebellicht-Scheinwerfer handeln.

Derartige Scheinwerfer sind bei heutigen Automobilen üblich. Sie werden nach den gültigen Richtlinien bezüglich der Lichtverteilungskennlinien ausgelegt und hergestellt. Abblendlicht-Scheinwerfer zeigen neben der charakteristischen Hell- Dunkelgrenze u.a. eine mehr oder weniger gleichmäßige und helle Ausleuchtung des Fahrzeugvorfeldes, das die angegebenen Abmessungen besitzt.

Die Scheinwerfer werden reflektorseitig als Ellipsoid oder Freiformflächenscheinwerfer ausgeführt. Zur Erzielung der geometrisch korrekten Lichtintensitäten auf der Fahrbahn werden zusätzlich optische Elemente wie Linsen und Blenden verwendet.

Das Lichtbild eines Abblendlicht-Scheinwerfers zeigt eine kontinuierliche Helligkeitsverteilung in radialer Richtung vom Fahrzeug weg, bezogen auf den auf der Fahrzeugachse liegenden Vorderpunkt. Insbesondere gilt das auch für den in das Fahrzeugvorfeld gerichteten Lichtanteil.

Bei trockener Fahrbahn wird ein Teil des Lichts von der Straßenoberfläche absorbiert, der andere Teil in erster Näherung diffus gestreut. Bei nasser oder eisglatter Fahrbahn entsteht jedoch eine Spiegelung an der Wasseroberfläche, die aufgrund der geometrischen Verhältnisse zu starken Leuchtdichten in Richtung des Gegenverkehrs und damit dort zu unerwünschter Blendung führt. Für den Fahrer läßt sich eine bessere Erkennbarkeit vorausbefindlicher Objekte nicht erreichen, da das in das Vorfeld eingestrahlte Licht vom Fahrzeug wegreflektiert wird.

Der Erfindung liegt die Aufgabe zugrunde, einen Scheinwerfer der eingangs genannten Art zu schaffen, bei dem die Gefahr einer Reflexion des Scheinwerferlichts zur Gegenfahrbahn hin verringert ist.

Die Erfindung löst diese Aufgabe mit den Merkmalen des Patentanspruchs 1. Die Erfindung geht von dem Grundprinzip aus, dann, wenn die angesprochene Gefahr besteht, die Ausleuchtung des Vorfelds zu reduzieren und ggf. sogar vollständig zu unterbinden. Diese Reduktion kann auch abhängig von der zu erwartenden Wegreflexion variabel sein, d.h. um so stärker sein, je größer diese Reflexionserscheinung ist.

Da die Vorfeldausleuchtung für den Fahrer bei nasser Straße überflüssig und für den Gegenverkehr hinderlich ist, wird vorgeschlagen, den Scheinwerfer derart aufzubauen, daß sich seine Gesamtlichtverteilung aus einer Vorfeldlicht- und einer Objekterkennungslichtkomponente zusammensetzt. Beide Lichtkomponenten entsprechen für die trockene Fahrbahn der heutigen oder noch neu festzulegenden Lichtverteilungen, während sie im Fall der nassen Straße um den Vorfeldlichtanteil reduziert wird.

Die Patentansprüche 2 bis 6 zeigen verschiedene konstruktive Ausgestaltungen des Scheinwerfers selbst, mit denen die Erfindung realisierbar ist.

Der Patentanspruch 7 beschreibt einen neuen Aufbau eines Scheinwerfersystems mit 2 Scheinwerfern, mit dem sich eine besonders einfache und gezielte Vorfeldbeleuchtung realisieren läßt.

Die Reduktion der Vorfeldleuchtdichte kann manuell geschaltet werden, ähnlich dem Zu- oder Abschalten eines Zusatzscheinwerfers. Sie kann, wie im Patentanspruch 8 angegeben, über indirekte Indikatoren gesteuert werden wie Scheibenwischerschalter - Stufe Intervall, Stufe 1, Stufe 2, und/oder einen Regen- oder µ-Wertsensor. Sie kann auch, wie im Patentanspruch 9 gezeigt, auf einer von externer Infrastruktur zur Verfügung gestellten Information beruhen.

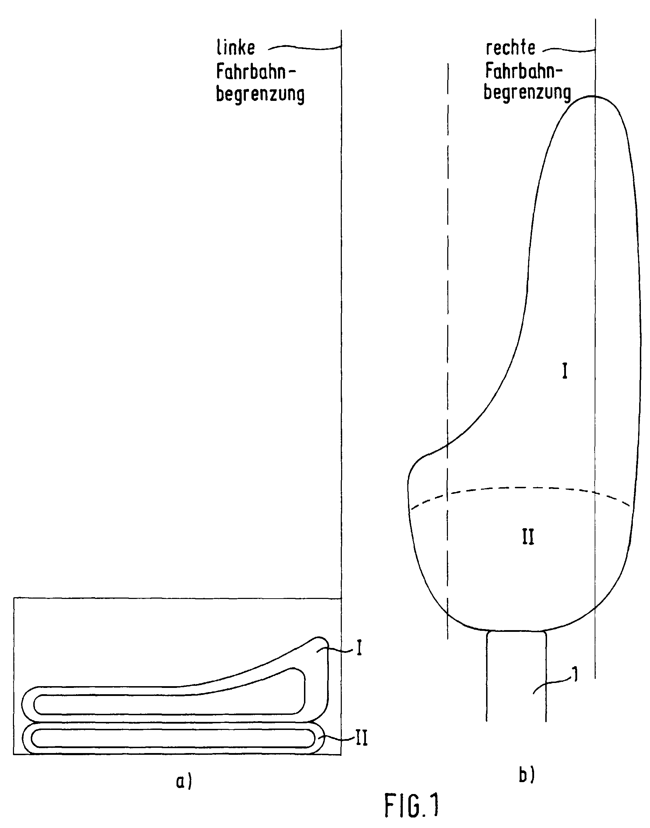

Anhand der Zeichnung ist die Erfindung weiter erläutert. Es zeigt
- Fig. 1: die Lichtverteilung des erfindungsgemäßen Scheinwerfers bzw. Scheinwerfersystems
- Fig. 2: ein erstes Ausführungsbeispiel eines derartigen Scheinwerfers in der Seitenansicht
- Fig. 3: eine Alternative zu Fig. 2
- Fig. 4: eine weitere Alternative in Vorderansicht
- Fig. 5: eine vierte und
- Fig. 6: eine fünfte Ausführungsform ebenfalls in Seitenansicht und
- Fig. 7: den grundsätzlichen Aufbau eines erfindungsgemäßen Scheinwerfersystems.

Erfindungsgemäß soll bei der Ausgestaltung als Abblendlicht-Scheinwerfer die Ausleuchtung des vor dem Fahrzeug befindlichen Feldes in zwei Teile aufteilbar sein, nämlich die Ausleuchtung eines Fernbereichs I und eines Vorfelds II. Die Aufteilung der beiden Felder ist im Diagramm a im Schnitt und im Diagramm b in der Draufsicht und bezogen auf eine Ebene senkrecht zur optischen Achse des Scheinwerfers dargestellt. Das Vorfeld II soll bis etwa in eine Entfernung von ca. 30m vor dem Fahrzeug 1 reichen.

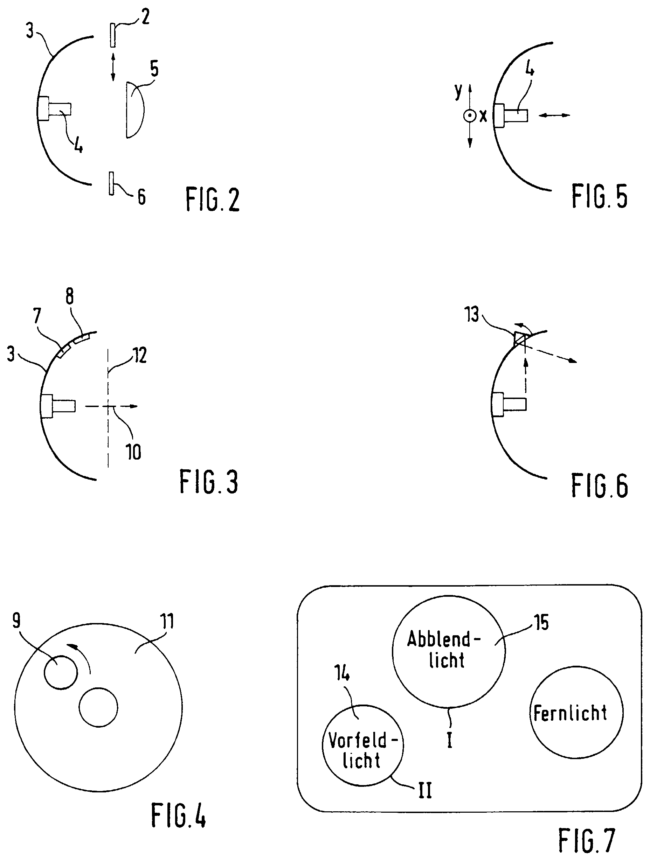

Die Wegschaltung bzw. Reduktion der in das Vorfeld II einfallenden Lichtmenge kann auf unterschiedliche Weise vorgenommen werden. In Fig. 2 ist eine Möglichkeit gezeigt, durch eine variable Blende 2 dieses Ziel zu erreichen. Der Scheinwerfer mit Reflektor 3, Lampe 4, Linse 5 und der üblichen Abblendlicht-Blende 6 besitzt zusätzlich die Blende 2, die senkrecht zu optischen Achse verfahrbar ist. Je weiter sie in den Scheinwerfer eingeführt ist, um so mehr wird das in das Vorfeld II gelangende Licht abgeblendet.

Ist es sinnvoll, das Vorfeld wieder auszuleuchten, beispielsweise weil nach zunächst nasser Fahrbahn die Fahrbahn nunmehr trocken ist, so wird die Blende 2 wieder aus dem Strahlengang entfernt. Der Scheinwerfer besitzt dann die übliche Lichtverteilung, bei der auch das Vorfeld ausgeleuchtet ist.

In Fig. 3 befinden sich innerhalb des Reflektors 3 verstellbare Reflektorelemente 7 und 8, bei denen es sich um rotierende oder klappbare Spiegelsegmente oder um mikromechanisch bewegte Spiegelelemente handeln kann. Diese werden je nach dem gewünschten Maß der Reduktion der Vorfeldbeleuchtungs-Intensität wirksam gemacht, indem sie umso stärker aus der Oberfläche des Reflektors 3 hervortreten.

In Fig. 4 ist eine Ausführungsform gezeigt, bei der ein Spiegelelement 9 vorgesehen ist, das um die Achse 10 des Scheinwerfers rotierbar ist. Das Spiegelelement befindet sich beispielsweise auf einer lichtdurchlässigen Scheibe 11 etwa an dem Ort, der in Fig. 3 durch einen senkrechten Strich 12 charakterisiert ist. Befindet sich das Spiegelelement auf dem Zenit, so entfaltet es seine maximale Wirkung. Es verhindert einen Lichtaustritt aus dem Scheinwerfer in Richtung des Vorfeldes. Wird das Spiegelelement abgesenkt, läßt es zunehmend Licht aus dem Scheinwerfer in das Vorfeld II eintreten. Auf diese Weise ist es möglich, die Ausleuchtung des Vorfeldes variabel zu gestalten.

Bei Fig. 5 ist die Lampe 4 innerhalb des Reflektors 3 beweglich. Sie kann beispielsweise nach oben geschwenkt oder aber in einer waagerechten Ebene verfahrbar sein. Dabei genügt eine Bewegung um wenige Millimeter, um die gewünschte Lichtverteilung bzw. Änderung der Lichtverteilung zu erzeugen.

Beim Ausführungsbeispiel von Fig. 6 sind Prismen 13 vorgesehen, die in den Strahlengang gebracht und/oder darin rotiert oder verschoben werden. Auch damit läßt sich die gewünschte Lichtverteilungsänderung erzeugen.

Beim Ausführungsbeispiel von Fig. 7 dient ein separater Scheinwerfer 14 zur Vorfeldbeleuchtung. Dieser Scheinwerfer erzeugt im Idealfall allein das gesamte in das Vorfeld einfallende Licht und kann ggf. ausgeschaltet werden. Es ist dann nur noch ein separater Scheinwerfer 15 wirksam, der den Fernbereich I ausleuchtet.

Die Vorfeldausleuchtung kann im Fall der nassen Fahrbahn abgeschaltet werden, was ein Sicherheitsgewinn für den Gegenverkehr bedeutet. Weiterhin ist es möglich, den Vorfeldanteil beispielsweise in Abhängigkeit sensorgestützter Parameter kontinuierlich zu dimmen.

## Patentansprüche

1. Scheinwerfer für Fahrzeuge, der innerhalb seines Ausleuchtbereichs ein Vorfeld beleuchtet, das bis in eine Entfernung von ca. 30 m vor dem Fahrzeug reicht, **dadurch gekennzeichnet,** daß die Ausleuchtungs-Intensität des Vorfelds bei einer Beschaffenheit der Fahrbahnoberfläche, bei der die Gefahr einer Reflexion des Scheinwerferlichts zur Gegenfahrbahn hin besteht, gegenüber dem Betriebsfall einer weitgehend reflexionsfreien Fahrbahn deutlich verringert ist.

2. Scheinwerfer nach Anspruch 1, **dadurch gekennzeichnet,** daß die Verringerung der Vorfeldbeleuchtungs-Intensität mittels einer Blende erzielbar ist, die in den Strahlengang einfahrbar ist.

3. Scheinwerfer nach Anspruch 1 oder 2, **dadurch gekennzeichnet,** daß zur Beleuchtung des Vorfelds ein zusätzliches optisches Element innerhalb des Scheinwerfers vorgesehen ist, das zur Verringerung der Vorfeldbeleuchtungs-Intensität in seiner Wirkung deaktivierbar ist.

4. Scheinwerfer nach Anspruch 3, **dadurch gekennzeichnet,** daß es sich bei dem Element um ein Spiegelelement handelt.

5. Scheinwerfer nach Anspruch 4, **dadurch gekennzeichnet,** daß die Bewegung des Spiegelelements rotatorisch bezüglich der Scheinwerferachse erfolgt.

6. Scheinwerfer nach einem der Ansprüche 1 bis 5, **dadurch gekennzeichnet,** daß zur Änderung der Lichtverteilung die Lampe innerhalb des Scheinwerfers verfahrbar ist.

7. Scheinwerfer nach Anspruch 1, **dadurch gekennzeichnet,** daß zur Vorfeldbeleuchtung ein separater Scheinwerfer vorgesehen ist.

8. Scheinwerfer nach einem der Ansprüche 1 bis 7, **dadurch gekennzeichnet,** daß die Information über den Fahrbahnzustand im Fahrzeug selbst gewonnen wird.

9. Scheinwerfer nach einem der Ansprüche 1 bis 8, **dadurch gekennzeichnet,** daß die Information über den Fahrbahnzustand von außerhalb des Fahrzeugs kommt.
